# EUROPÄISCHE PATENTSCHRIFT

(11) **EP 3 474 687 B1**
(45) Veröffentlichungstag und Bekanntmachung des Hinweises auf die Patenterteilung: **05.08.2020**
(21) Anmeldenummer: 17730437.5
(22) Anmeldetag: 08.06.2017
(51) Int. Cl.: A23P 30/20, A23P 20/25

(54) **SYSTEM ZUR HERSTELLUNG EINES NAHRUNGSMITTELS MIT DRUCKKOPF-LAGERUNGS-KAMMER**
SYSTEM FOR PRODUCING A FOODSTUFF, COMPRISING AN EXTRUSION HEAD STORAGE CHAMBER
SYSTÈME SERVANT À FABRIQUER UN PRODUIT ALIMENTAIRE, DOTÉ D'UNE CHAMBRE DE LOGEMENT DE TÊTE DE PRESSION

(30) Priorität: 22.06.2016 DE 102016211161
(43) Veröffentlichungstag der Anmeldung: 01.05.2019
(73) Patentinhaber: BSH Hausgeräte GmbH, 81739 München (DE)
(72) Erfinder: ERBE, Sebastian, DE 75438 Knittlingen-Freudenstein (DE); GÜL, Ugur Dogan, 34394 Istanbul (TR); SCHUSTER, Lucia, DE 70197 Stuttgart (DE); SUAREZ IRIBARNE, Álvaro, ES 08002 Barcelona (ES)
(86) Internationale Anmeldenummer: PCT/EP2017/063977
(87) Internationale Veröffentlichungsnummer: WO 2017/220335

(56) Entgegenhaltungen:
- WO-A1-2014/190168
- WO-A1-2014/190217
- WO-A1-2015/106059
- CN-A- 104 921 281
- CN-A- 105 196 553
- DE-A1-102014 011 882

## Beschreibung

Die Erfindung betrifft ein System, insbesondere ein Hausgerät bzw. Haushaltsgerät, zum Druck und Garen eines Nahrungsmittels.

Nahrungsmitteldrucker können dazu verwendet werden, aus einer essbaren Druckmasse eine räumliche Anordnung von Druckmasse zu erzeugen. Die räumliche Anordnung von Druckmasse kann dann in einer separaten Gareinheit, insbesondere in einem separaten Ofen, gegart werden, um ein individualisiertes, gegartes Nahrungsmittel bereitzustellen. Die CN104921281 A beschreibt ein System zur Herstellung eines Nahrungsmittels.

Das vorliegende Dokument befasst sich mit der technischen Aufgabe, ein System bereitzustellen, mit dem die Herstellung eines individualisierten, gegarten Nahrungsmittels vereinfacht und beschleunigt werden kann.

Die Aufgabe wird durch den Gegenstand des unabhängigen Patentanspruchs gelöst. Vorteilhafte fakultative Ausführungsformen sind insbesondere in den abhängigen Patentansprüchen definiert, in nachfolgender Beschreibung beschrieben oder in den Figuren der beigefügten Zeichnung dargestellt.

Gemäß einem Aspekt der Erfindung wird ein System zur Herstellung eines gegarten Nahrungsmittels beschrieben. Das System kann als ein Hausgerät bzw. als ein Haushaltsgerät ausgebildet sein, das z.B. auf eine Arbeitsplatte einer Küche gestellt und/oder in einen Einbauschrank eingebaut werden kann. Insbesondere kann das System Dimensionen aufweisen (z.B. Kanten von 50cm Länge oder weniger), die das System für die Nutzung als Hausgerät befähigen.

Das System umfasst eine Druckkammer mit einem beweglichen Druckkopf zur Extrusion von Druckmasse, sowie eine Garkammer mit Mitteln zum Garen von Druckmasse. Die Kammern können innerhalb eines Gehäuses des Systems angeordnet sein. Insbesondere können die Kammern zumindest teilweise durch Wände eines Gehäuses des Systems gebildet werden. Die Druckkammer kann für den Druck eines Nahrungsmittels verwendet werden, und die Garkammer kann für das Garen eines Nahrungsmittels verwendet werden. Dabei kann die Garkammer bevorzugt über der Druckkammer angeordnet sein. Dies ist insbesondere vorteilhaft, um die Wärmeenergie der Garkammer innerhalb der Garkammer zu halten.

Das System umfasst weiter eine bewegliche Ablagefläche, die durch einen Bewegungsmechanismus zwischen der Druckkammer (d.h. einer ersten Stellung bzw. Position) und der Garkammer (d.h. einer zweiten Stellung bzw. Position) bewegt werden kann. Die Ablagefläche kann, insbesondere wenn sich die Ablagefläche in oder an der Garkammer (d.h. in der zweiten Stellung) befindet, eine Wand der Garkammer und/oder der Druckkammer bilden. Das System kann für die Bewegung der Ablagefläche ein oder mehrere zwischen der Druckkammer und der Garkammer verlaufende (vertikale) Führungsschienen umfassen, entlang der die bewegliche Ablagefläche mittels des Bewegungsmechanismus zwischen der Druckkammer und der Garkammer bewegt werden kann. So kann eine effiziente und präzise Bewegung der Ablagefläche ermöglicht werden.

Außerdem umfasst das System eine seitlich neben der Druckkammer angeordnete Lagerungs-Kammer zur Aufnahme des Druckkopfes. Die Lagerungs-Kammer kann derart angeordnet sein, dass der Druckkopf durch Überführung in die Lagerungs-Kammer aus der Bewegungstrajektorie der Ablagefläche zwischen der ersten Stellung und der zweiten Stellung genommen werden kann. Des Weiteren kann die Lagerungs-Kammer derart angeordnet sein, dass die Lagerungs-Kammer einen Schutz für den Druckkopf während eines Garvorgangs innerhalb der Garkammer bildet. Die Lagerungs-Kammer ermöglicht somit die Bereitstellung einer Druckkammer und einer Garkammer innerhalb eines einzigen Geräts. So können in komfortabler und zuverlässiger Weise individuell gedruckte und gegarte Nahrungsmittel hergestellt werden. Insbesondere kann dabei ein automatischer Übergang zwischen der Druckkammer (zum Drucken eines Nahrungsmittels) und der Garkammer (zum Garen des Nahrungsmittels) ermöglicht werden.

Das System kann weiter eine Steuereinheit umfassen, die eingerichtet ist, zu veranlassen, dass die bewegliche Ablagefläche zur Erzeugung einer räumlichen Anordnung von Druckmasse in der Druckkammer und/oder unterhalb des Druckkopfes (d.h. in der ersten Stellung) angeordnet ist. Außerdem ist die Steuereinheit eingerichtet, den Druckkopf anzusteuern, eine räumliche Anordnung von Druckmasse auf der Ablagefläche zu erzeugen. Insbesondere kann (z.B. in Abhängigkeit von einem Rezept) Druckmasse aus ein oder mehreren Düsen des Druckkopfes extrudiert und auf der Ablagefläche abgelegt werden, so dass eine räumliche Anordnung von Druckmasse entsteht.

Die Steuereinheit ist weiter eingerichtet, den Druckkopf anzusteuern, im Anschluss an den Druckvorgang in die Lagerungs-Kammer überzugehen. So kann der Weg für einen Transfer der Ablagefläche von der ersten Stellung (für den Druckvorgang) in die zweite Stellung (für den Garvorgang) freigemacht werden. Des Weiteren kann so der Druckkopf vor Beeinträchtigungen während des Garvorgangs geschützt werden.

Außerdem ist die Steuereinheit eingerichtet, den Bewegungsmechanismus anzusteuern, die bewegliche Ablagefläche mit der räumlichen Anordnung von Druckmasse in die Garkammer (d.h. in die zweite Stellung) zu überführen. Mit anderen Worten, die Ablagefläche kann von der ersten Stellung bzw. Position (für die Erstellung einer räumlichen Anordnung von Druckmasse) in die zweite Stellung bzw. Position (für das Garen der räumlichen Anordnung von Druckmasse) überführt werden.

Außerdem ist die Steuereinheit eingerichtet, die Mittel zum Garen anzusteuern, um durch Garen der räumlichen Anordnung von Druckmasse ein gegartes Nahrungsmittel herzustellen. Es kann somit in automatischer Weise ein Nahrungsmittel innerhalb des Systems gedruckt und gegart werden.

Das System kann eine thermisch isolierende Wand umfassen, die eingerichtet ist, die Lagerungs-Kammer thermisch von der Garkammer zu isolieren, insbesondere wenn sich die Ablagefläche in der Garkammer befindet. So kann der Druckkopf während eines Garvorgangs innerhalb der Lagerungs-Kammer vor Beeinträchtigungen geschützt werden. Die thermisch isolierende Wand kann dabei zumindest teilweise durch die Ablagefläche gebildet werden. Insbesondere kann die Ablagefläche derart ausgebildet sein, dass die Ablagefläche die Garkammer zur Druckkammer hin abschließt. Des Weiteren kann die Ablagefläche eine thermisch isolierende Schicht umfassen.

Alternativ oder ergänzend kann die Lagerungs-Kammer ein bewegliches Tor (z.B. ein verschiebbares Tor) umfasst, mit dem die Lagerungs-Kammer zur Druckkammer hin verschlossen werden kann. Beispielsweise kann das bewegliche Tor zwischen die Lagerungs-Kammer und die Druckkammer geschoben werden, wenn sich der Druckkopf innerhalb der Lagerungs-Kammer befindet. Durch das bewegliche Tor kann dann die Öffnung zwischen der Druckkammer und der Lagerungs-Kammer verschlossen werden. Das bewegliche Tor kann eine thermisch isolierende Schicht aufweisen. Somit kann die thermisch isolierende Wand ein bewegliches Tor der Lagerungs-Kammer umfassen.

Die Lagerungs-Kammer kann Temperierungs-Mittel umfassen, um den Innenraum der Lagerungs-Kammer zu temperieren (insbesondere zu kühlen). So kann der Druckkopf besonders gut vor Hitzeeinwirkung aus der Garkammer geschützt werden. Die Temperierungs-Mittel können ein Gebläse umfassen, um eine Luftzirkulation im Innenraum der Lagerungs-Kammer zu bewirken. Des Weiteren können die Temperierungs-Mittel einen Wärmetauscher umfassen, um thermische Energie aus dem Innenraum an eine Umgebung der Lagerungs-Kammer zu überführen. Außerdem können die Temperierungs-Mittel einen Lüftungskanal umfassen, über den Luft aus dem Innenraum der Lagerungs-Kammer entnommen und über den Luft in den Innenraum der Lagerungs-Kammer geführt werden kann. Somit kann durch die Temperierungs-Mittel in effizienter und zuverlässiger Weise thermische Energie aus dem Innenraum der Lagerungs-Kammer entnommen werden, um den Druckkopf zu kühlen.

Das System kann ein oder mehrere laterale Führungsschienen umfassen, die sich von der Druckkammer in die Lagerungs-Kammer erstrecken. Der Druckkopf kann eingerichtet sein, sich entlang der ein oder mehreren lateralen Führungsschienen zwischen der Druckkammer und der Lagerungs-Kammer zu bewegen. Insbesondere kann die Steuereinheit eingerichtet sein, den Druckkopf zu veranlassen, sich zur Erzeugung der räumlichen Anordnung von Druckmasse entlang der ein oder mehreren lateralen Führungsschienen zu bewegen. Des Weiteren kann die Steuereinheit eingerichtet sein, den Druckkopf zu veranlassen, sich im Anschluss an den Druckvorgang entlang der ein oder mehreren lateralen Führungsschienen in die Lagerungs-Kammer zu begeben. Der Druckkopf kann zu diesem Zweck ein oder mehrere Aktuatoren (insbesondere Elektromotoren) umfassen, um sich entlang der ein oder mehreren lateralen (bzw. horizontalen) Führungsschienen zu bewegen. Durch die Bereitstellung von ein oder mehreren Führungsschienen, die sich bis in die Lagerungs-Kammer erstrecken, kann eine effiziente Bewegung des Druckkopfes ermöglicht werden.

Die Steuereinheit kann eingerichtet sein, die bewegliche Ablagefläche nach Beendigung eines Garvorgangs innerhalb der Garkammer von der Garkammer (d.h. von der zweiten Stellung) in die Druckkammer (d.h. in die erste Stellung) zu überführen, um das gegarte Nahrungsmittel für einen Nutzer des Systems zugänglich zu machen. So kann auf einen dedizierten Zugang (z.B. auf eine Klappe) zu der Garkammer verzichtet werden, wodurch die thermische Isolierung der Garkammer verbessert wird. Des Weiteren kann so erreicht werden, dass ein Nutzer das gegarte Nahrungsmittel in komfortabler und unkritischer Weise aus der relativ kühlen Druckkammer und nicht aus einer ggf. heißen Garkammer entnehmen kann.

Die Mittel zum Garen können in oder an der Ablagefläche ferromagnetisches Material umfassen. Des Weiteren können die Mittel zum Garen eine Induktionsspule umfassen, die derart ausgelegt ist, dass sie das ferromagnetische Material durch Erzeugung eines magnetischen Feldes erhitzen kann, wenn sich die Ablagefläche für einen Garvorgang innerhalb der Garkammer (d.h. in der zweiten Stellung) befindet. Die Verwendung von induzierter Wärme in oder an der Ablagefläche ermöglicht ein besonders effizientes Garen eines Nahrungsmittels. Insbesondere kann so ein gebratenes Nahrungsmittel hergestellt werden.

Alternativ oder ergänzend können die Mittel zum Garen ein oder mehrere Heizelemente umfassen, die eingerichtet sind, durch Konvektion (z.B. durch Erwärmung der Atmosphäre innerhalb der Garkammer) und/oder durch Strahlung (z.B. durch Mikrowellen) die Garkammer und/oder Druckmasse zu erhitzen. So kann z.B. ein gebackenes und/oder anderweitig erwärmtes Nahrungsmittel bereitgestellt werden.

Der Druckkopf kann ein oder mehrere Druckmasse-Behälter mit jeweils zumindest einer Düse umfassen, durch die Druckmasse aus dem jeweiligen Druckmasse-Behälter auf die Ablagefläche extrudiert werden kann. Durch die Bereitstellung von mehreren Druckmasse-Behältern können komplexe Nahrungsmittel (z.B. mit schichtweise unterschiedlichen Druckmassen) hergestellt werden.

Der Druckkopf kann zumindest eine Temperierungseinheit (z.B. eine Heizung und/oder Kühlung) für zumindest einen Druckmasse-Behälter und/oder für zumindest eine Düse umfassen, mit der Druckmasse in dem Druckmasse-Behälter und/oder in der Düse temperiert werden kann, um Fließeigenschaften der Druckmasse zu verändern. Durch die Temperierung der Druckmasse kann eine präzise Herstellung von Nahrungsmitteln gewährleistet werden.

Der Druckkopf kann entlang der ein oder mehreren lateralen Führungsschienen zumindest innerhalb einer Ebene (z.B. in einer X/Y-Ebene parallel zu der Ablagefläche, in einem bestimmten Abstand Z zu der Ablagefläche) über der beweglichen Ablagefläche bewegt werden. Die Steuereinheit kann eingerichtet sein, den Druckkopf und/oder den Bewegungsmechanismus anzusteuern, um die räumliche Anordnung von Druckmasse auf der beweglichen Ablagefläche zu erzeugen. Die Steuereinheit kann insbesondere eingerichtet sein, den Bewegungsmechanismus der Ablagefläche anzusteuern, einen Abstand zwischen der Ablagefläche und dem Druckkopf zu verändern, um schichtweise Druckmasse auf die räumliche Anordnung von Druckmasse aufzutragen. Durch eine Anpassung des Abstands während des Druckprozesses können in präziser Weise unterschiedliche Schichten auf die Anordnung von Druckmasse aufgetragen werden. Dabei ist eine Bewegung der Ablagefläche vorteilhaft, da so ein Kosten-günstiger und Bauraum-effizienter Druckkopf verwendet werden kann, der nicht in Z-Richtung bewegt werden kann. Mit anderen Worten, die Anpassung des Abstands zwischen Druckkopf und Ablagefläche kann (ggf. ausschließlich) durch Bewegung der Ablagefläche bewirkt werden.

Es ist zu beachten, dass jegliche Aspekte des in diesem Dokument beschriebenen Systems in vielfältiger Weise miteinander kombiniert werden können. Insbesondere können die Merkmale der Patentansprüche in vielfältiger Weise miteinander kombiniert werden.

Im Weiteren wird die Erfindung anhand von in den Figuren der beigefügten Zeichnung dargestellten Ausführungsbeispielen näher beschrieben. Dabei zeigen
- Figur 1: ein Blockdiagramm eines Systems zur Herstellung eines Nahrungsmittels in einem Druckzustand, d.h. in einer ersten Stellung;
- Figur 2: ein Blockdiagramm eines Systems zur Herstellung eines Nahrungsmittels in einem Garzustand, d.h. in einer zweiten Stellung; und
- Figur 3: beispielhafte Temperierungs-Mittel für eine Druckkopf -Lagerungs-Kammer.

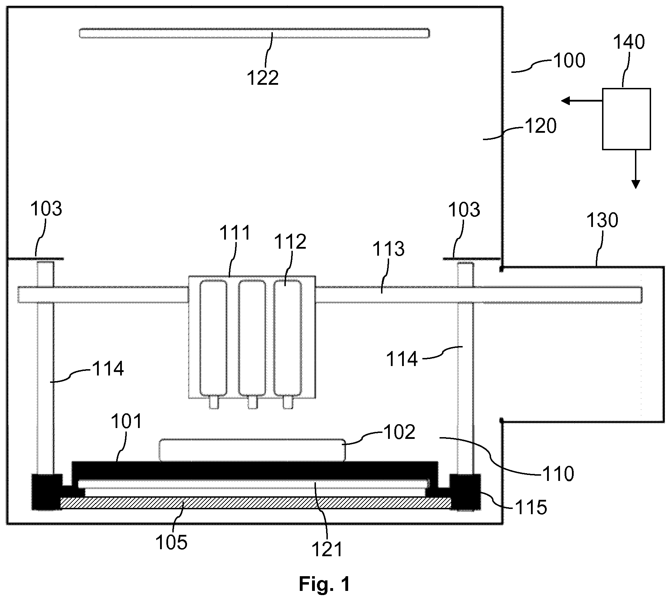

Wie eingangs dargelegt, befasst sich das vorliegende Dokument mit der komfortablen Herstellung von individualisierten, gegarten Nahrungsmitteln. In diesem Zusammenhang zeigt Fig. 1 ein System 100 zur Herstellung eines Nahrungsmittels, das eine bewegliche Ablagefläche 101 aufweist, mit der eine räumliche Anordnung von Druckmasse für ein Nahrungsmittel 102 von einer Druckkammer 110 in eine Garkammer 120 überführt werden kann, um das Nahrungsmittel 102 zu garen. Des Weiteren kann nach Abschluss des Garvorgangs ein fertig gegartes Nahrungsmittel 102 wieder mittels der beweglichen Ablagefläche 101 aus der Garkammer 120 in die Druckkammer 110 überführt werden, z.B. um eine komfortable Entnahme des gegarten Nahrungsmittels 102 zu ermöglichen oder um den Druckvorgang fortzusetzen. Durch das automatische Verfahren zwischen einer Druckkammer 110 und einer Garkammer 120 kann in komfortabler und individueller Weise ein Nahrungsmittel 102 innerhalb eines einzigen Systems bzw. innerhalb eines einzigen Gerätes 100 gedruckt, gegart und bereitgestellt werden.

In dem in Fig. 1 dargestellten Beispiel ist die Druckkammer 110 (für den Druck einer räumlichen Anordnung von Druckmasse) unterhalb bzw. unter der Garkammer 120 angeordnet. Die bewegliche Ablagefläche 101 kann entlang ein oder mehrerer (vertikaler) Führungsschienen 114 von der unten liegenden Druckkammer 110 in die darüber liegende Garkammer 120 bewegt werden. Zu diesem Zweck kann die bewegliche Ablagefläche 101 mit einem Bewegungsmechanismus 115 (z.B. mit einem durch einen Motor angetriebenen Zahnrad) entlang der ein oder mehreren Führungsschienen 114 geführt werden.

Die Druckkammer 110 umfasst einen Druckkopf 111 mit einer oder mehreren Düsen 112, wobei durch jede Düse 112 jeweils eine Art von Druckmasse auf die Ablagefläche 101 extrudiert werden kann, um eine räumliche Anordnung von Druckmasse zu erzeugen. Eine Düse 112 kann Mittel aufweisen (nicht dargestellt), mit denen die Fließeigenschaften der jeweiligen Druckmasse beeinflusst werden können. Beispielsweise können die Mittel eine Temperierungseinheit, insbesondere eine Heiz- und/oder Kühleinheit, zur Anpassung der Temperatur der zu extrudierenden Druckmasse umfassen.

Der Druckkopf 111 kann entlang einer oder mehrerer (lateraler oder horizontaler) Führungsschienen 113 an unterschiedliche Positionen über der Ablagefläche 101 bewegt werden, um an unterschiedlichen Positionen Druckmasse extrudieren zu können. Insbesondere kann der Druckkopf 111 in X- und Y-Richtung innerhalb einer Ebene (bei gleichem Abstand zur Ablagefläche 101) bewegt werden. Des Weiteren kann der Druckkopf 111 ggf. in Z-Richtung bewegt werden, um den Abstand zwischen Druckkopf 111 und Ablagefläche 101 zu verändern. Alternativ oder ergänzend kann der Abstand in Z-Richtung durch das Heben und/oder Senken der Ablagefläche 101 bewirkt werden.

Die Düsen 112 und die Bewegung des Druckkopfes 111 bzw. die Bewegung der Ablagefläche 101 entlang der Führungsschienen 113, 114 können über eine Steuereinheit 140 des Systems 100 angesteuert werden, um den Druckkopf 111 zu bewegen, um die Ablagefläche 101 zu bewegen und/oder um Druckmasse zu extrudieren. Dabei kann die Ansteuerung in Abhängigkeit von einem Rezept erfolgen, wobei das Rezept die Form der zu erstellenden räumlichen Anordnung von Druckmasse und die Positionen, Mengen und Arten der dazu zu extrudierenden ein oder mehreren Druckmassen spezifiziert. So kann in zuverlässiger Weise innerhalb der Druckkammer 110 eine räumliche Anordnung von Druckmasse generiert werden.

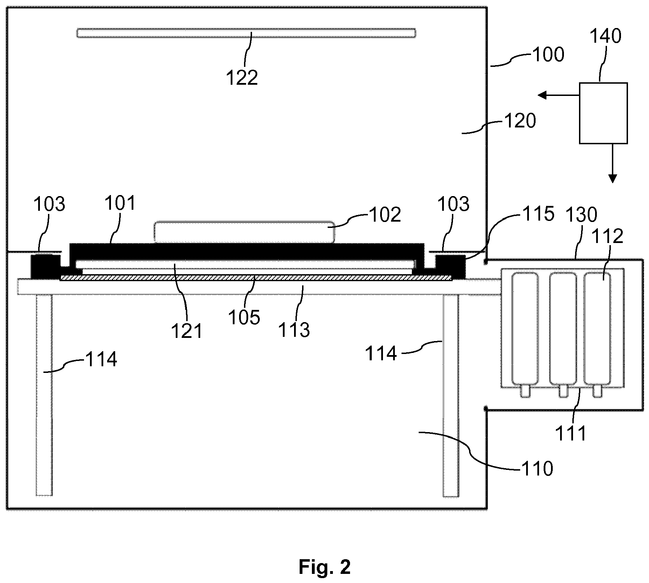

Nach Fertigstellung der räumlichen Anordnung von Druckmasse kann der Bewegungsmechanismus 115 durch die Steuereinheit 140 angesteuert werden, um die Ablagefläche 101 von der Druckkammer 110 (d.h. von einer in Fig. 1 dargestellten ersten Stellung) in die Garkammer 120 (d.h. in eine in Fig. 2 dargestellte zweite Stellung) zu bewegen (z.B. anzuheben). Fig. 2 zeigt den Zustand des Systems 100, wenn sich die Ablagefläche 101 für einen Garvorgang in der Garkammer 120 (d.h. in der zweiten Stellung) befindet. Die Garkammer 120 kann für den Garvorgang durch die Ablagefläche 101 selbst und durch Wandsegmente 103 zur Druckkammer 110 hin verschlossen werden. So kann eine zuverlässige thermische Isolierung zwischen Garkammer 120 und Druckkammer 110 bereitgestellt werden. Des Weiteren können so Verschmutzungen oder Beeinträchtigungen der Druckkammer 110 bzw. des Druckkopfes 111 aufgrund des Garvorgangs vermieden werden.

Die Garkammer 120 weist ein oder mehrere Mittel 121, 122 zum Garen der räumlichen Anordnung von Druckmasse auf. Die Mittel 121, 122 zum Garen können z.B. eine Induktionsspule umfassen, mit der ferromagnetisches Material 121 in oder an der Ablagefläche 101 erhitzt werden kann, um von unten her die räumliche Anordnung von Druckmasse zu erwärmen bzw. zu erhitzen und damit zu garen. Des Weiteren können die Mittel 121, 122 zum Garen ein oder mehrere Heizelemente 122 umfassen (z.B. oberhalb und/oder seitlich zu der räumlichen Anordnung von Druckmasse), z.B. um die Garkammer 120 aufzuheizen und um damit die räumliche Anordnung von Druckmasse zu einem gegarten Nahrungsmittel 105 zu verarbeiten. Die Mittel 121, 122 zum Garen können durch die Steuereinheit 140 angesteuert werden (insbesondere in Abhängigkeit von einem Rezept, das Parameter des Garvorgangs beschreibt).

Es kann somit ein System 100 (und insbesondere ein Hausgerät) bereitgestellt werden, das in autonomer Weise ein Nahrungsmittel 102 drucken und garen kann. Insbesondere kann das Nahrungsmittel 102 in effektiver und autonomer Weise durch eine bewegliche Ablagefläche 101 von einer Druckkammer 110 des Systems 100 in eine Garkammer 120 des Systems 100 (und umgekehrt) befördert werden. So kann der Komfort und der Zeitaufwand für die Herstellung eines Nahrungsmittels 102 reduziert werden. Des Weiteren kann durch die Integration von Druckkammer 110 und Garkammer 120 in einem einzigen System 100 (mit einem einzigen Gehäuse) der erforderliche Platzaufwand reduziert werden. Dies gilt insbesondere wenn Druckkamer 110 und Garkammer 120 übereinander angeordnet sind.

Das System 100 umfasst weiter eine Druckkopf-Lagerungs-Kammer 130, in die der Druckkopf 111 über die ein oder mehreren (lateralen) Führungsschienen 113 überführt werden kann, um den Druckkopf 111 aus der Bewegungstrajektorie der Ablagefläche 101 (zwischen der ersten Stellung und der zweiten Stellung) zu nehmen und um den Druckkopf 111 während eines Garvorgangs zu schützen. Die Druckkopf-Lagerungs-Kammer 130 kann, wie in den Figuren 1 und 2 dargestellt, seitlich neben der Druckkammer 110 angeordnet sein. Die ein oder mehreren lateralen Führungsschienen 113 können sich seitlich über die Druckkammer 110 hinaus in die Druckkopf-Lagerungs-Kammer 130 erstrecken, so dass der Druckkopf 111 im Anschluss an einen Druckvorgang entlang der ein oder mehreren lateralen Führungsschienen 113 in die Lagerungs-Kammer 130 überführt werden kann.

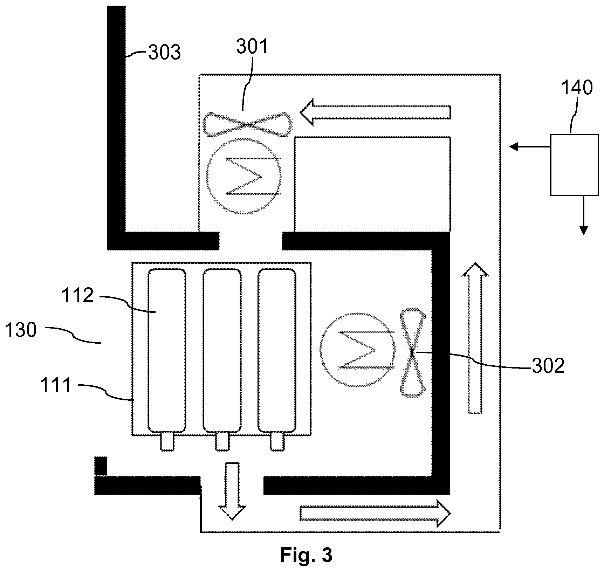

Fig. 3 zeigt weitere Details der Lagerungs-Kammer 130. Die Lagerungs-Kammer 130 kann Temperierungs-Mittel 301, 302 umfassen, die eingerichtet sind, die Lagerungs-Kammer 130 zu temperieren, insbesondere zu kühlen, um den Druckkopf 111 vor Hitzeeinwirkungen aus der Garkammer 120 zu schützen. Die Temperierungs-Mittel 301, 302 können z.B. ein Gebläse umfassen, um eine Luftzirkulation zu bewirken. Des Weiteren können die Temperierungs-Mittel 301, 302 einen Wärmetauscher umfassen, um thermische Energie aus der Lagerungs-Kammer 130 zu entnehmen. Die Temperierungs-Mittel 301 bewirken dabei eine Luftzirkulation über einen Lüftungskanal, der außerhalb der Lagerungs-Kammer 130 liegt (siehe in Fig. 3 dargestellte Pfeile), während die Temperierungs-Mittel 302 eine Luftzirkulation bewirken, die ausschließlich innerhalb der Lagerungs-Kammer 130 erfolgt. Ein Wärmetauscher kann z.B. Kühlrippen umfassen, um thermische Energie aus dem Innenraum der Lagerungs-Kammer 130 an die Umgebung der Lagerungs-Kammer 130 abzugeben.

Die Lagerungs-Kammer 130 kann thermisch von der Garkammer 120 isoliert sein. Insbesondere kann während eines Garvorgangs eine thermisch isolierende Wand zwischen die Garkammer 120 und die Lagerungs-Kammer 130 gefahren werden, um die Lagerungs-Kammer 130 thermisch von der Garkammer 120 zu isolieren und um so den Druckkopf 111 vor schädlichen Hitzeeinwirkungen zu schützen.

Die thermisch isolierende Wand kann zumindest teilweise durch die Ablagefläche 101 gebildet werden. Für einen Garvorgang wird die Ablagefläche 101 wie in Fig. 2 dargestellt nach oben gefahren. Die Ablagefläche 101 kann dabei derart ausgelegt sein, dass durch die Ablagefläche 101 (z.B. in Zusammenwirken mit Wandsegmenten 103) die Garkammer 120 nach unten zur Druckkammer 110 und zur Lagerungs-Kammer 130 hin abgeschlossen wird. Des Weiteren können die Ablagefläche 101 und ggf. die Wandsegmente 103 eine thermisch isolierende Schicht 105 aufweisen, um die Garkammer 120 thermisch von der Druckkammer 110 und der Lagerungs-Kammer 130 zu isolieren.

Alternativ oder ergänzend kann die thermisch isolierende Wand zwischen der Garkammer 120 und der Lagerungs-Kammer 130 durch ein Tor 303 bereitgestellt werden, mit dem die Lagerungs-Kammer 130 nach Aufnahme des Druckkopfes 111 zur Druckkammer 110 hin verschlossen werden kann. Beispielsweise kann, wie in Fig. 3 dargestellt, ein Schiebetor 303 zwischen die Lagerungs-Kammer 130 und die Druckkammer 110 geschoben werden. Das Tor 303 der Lagerungs-Kammer 130 kann dabei eine thermisch isolierende Schicht aufweisen und somit die Lagerungs-Kammer 130 thermisch von der Druckkammer 110 und von der Garkammer 120 isolieren.

Das in diesem Dokument beschriebene System 100 ermöglicht es, in automatischer und platzsparender Weise ein Nahrungsmittel 102 innerhalb eines einzigen Geräts zu drucken und zu garen. Dabei ist die (warme) Garkammer 120 vorteilhaft oberhalb der Druckkammer 110 angeordnet, so dass die Wärme effizient innerhalb der Garkammer 120 gehalten werden kann. Das System 100 umfasst darüber hinaus eine Lagerungs-Kammer 130 für den Druckkopf 111, so dass der Druckkopf 111 zuverlässig vor Beeinträchtigungen während eines Garvorgangs geschützt werden kann.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Systems veranschaulichen sollen.

## Patentansprüche

1. System (100) zur Herstellung eines gegarten Nahrungsmittels (102), wobei das System (100) umfasst,
- eine Druckkammer (110) mit einem beweglichen Druckkopf (111) zur Extrusion von Druckmasse;
- eine über der Druckkammer (110) angeordnete Garkammer (120) mit Mitteln (121, 122) zum Garen von Druckmasse;
- eine bewegliche Ablagefläche (101) für Druckmasse, die durch einen Bewegungsmechanismus (115) zwischen der Druckkammer (110) und der Garkammer (120) bewegt werden kann; und
- eine seitlich neben der Druckkammer (110) angeordnete Lagerungs-Kammer (130) zur Aufnahme des Druckkopfes (111).

2. System (100) gemäß Anspruch 1, wobei das System (100) eine Steuereinheit (140) umfasst, die eingerichtet ist,
- zu veranlassen, dass die bewegliche Ablagefläche (101) zur Erzeugung einer räumlichen Anordnung von Druckmasse in der Druckkammer (110) unterhalb des Druckkopfes (111) angeordnet ist;
- den Druckkopf (111) anzusteuern, eine räumliche Anordnung von Druckmasse auf der Ablagefläche (101) zu erzeugen, und sich im Anschluss daran in die Lagerungs-Kammer (130) zu begeben;
- den Bewegungsmechanismus (115) anzusteuern, die bewegliche Ablagefläche (101) mit der räumlichen Anordnung von Druckmasse in die Garkammer (120) zu überführen; und
- die Mittel (121, 122) zum Garen anzusteuern, um durch Garen der räumlichen Anordnung von Druckmasse ein gegartes Nahrungsmittel (102) herzustellen.

3. System (100) gemäß einem der vorhergehenden Ansprüche, wobei das System (100) eine thermisch isolierende Wand umfasst, die eingerichtet ist, die Lagerungs-Kammer (130) thermisch von der Garkammer (120) zu isolieren, insbesondere wenn sich die Ablagefläche (101) in der Garkammer (120) befindet.

4. System (100) gemäß Anspruch 3, wobei
- die thermisch isolierende Wand zumindest teilweise durch die Ablagefläche (101) gebildet wird;
- die Ablagefläche (101) derart ausgebildet ist, dass die Ablagefläche (101) die Garkammer (120) zur Druckkammer (110) hin abschließt; und
- die Ablagefläche (101) eine isolierende Schicht (105) umfasst.

5. System (100) gemäß einem der Ansprüche 3 bis 4, wobei
- die Lagerungs-Kammer (130) ein bewegliches Tor (303) umfasst, mit dem die Lagerungs-Kammer (130) zur Druckkammer (110) hin verschlossen werden kann;und
- die thermisch isolierende Wand das bewegliche Tor (303) umfasst.

6. System (100) gemäß einem der vorhergehenden Ansprüche, wobei die Lagerungs-Kammer (130) Temperierungs-Mittel (301, 302) umfasst, um einen Innenraum der Lagerungs-Kammer (130) zu temperieren.

7. System (100) gemäß Anspruch 6, wobei die Temperierungs-Mittel (301, 302)
- ein Gebläse umfassen, um eine Luftzirkulation im Innenraum der Lagerungs-Kammer (130) zu bewirken; und/oder
- einen Wärmetauscher umfassen, um thermische Energie aus dem Innenraum an eine Umgebung der Lagerungs-Kammer (130) zu überführen.

8. System (100) gemäß einem der Ansprüche 6 bis 7, wobei die Temperierungs-Mittel (301) einen Lüftungskanal umfassen, über den Luft aus dem Innenraum der Lagerungs-Kammer (130) entnommen und über den Luft in den Innenraum der Lagerungs-Kammer (130) geführt werden kann.

9. System (100) gemäß einem der vorhergehenden Ansprüche, wobei das System (100) ein oder mehrere zwischen der Druckkammer (110) und der Garkammer (120) verlaufende vertikale Führungsschienen (114) umfasst, entlang der die bewegliche Ablagefläche (101) mittels des Bewegungsmechanismus (115) zwischen der Druckkammer (110) und der Garkammer (120) bewegt werden kann.

10. System (100) gemäß einem der vorhergehenden Ansprüche, wobei
- das System (100) ein oder mehrere laterale Führungsschienen (113) umfasst, die sich von der Druckkammer (110) in die Lagerungs-Kammer (130) erstrecken; und
- der Druckkopf (111) eingerichtet ist, sich entlang der ein oder mehreren lateralen Führungsschienen (113) zwischen der Druckkammer (110) und der Lagerungs-Kammer (130) zu bewegen.

11. System (100) gemäß Anspruch 10 mit Rückbezug auf Anspruch 2, wobei die Steuereinheit (140) eingerichtet ist, den Druckkopf (111) zu veranlassen,
- sich zur Erzeugung der räumliche Anordnung von Druckmasse entlang der ein oder mehreren lateralen Führungsschienen (113) zu bewegen; und
- sich im Anschluss daran, entlang der ein oder mehreren lateralen Führungsschienen (113) in die Lagerungs-Kammer (130) zu begeben.

12. System (100) gemäß Anspruch 11, wobei die Steuereinheit (140) eingerichtet ist, den Bewegungsmechanismus (115) der Ablagefläche (101) anzusteuern, einen Abstand zwischen der Ablagefläche (101) und dem Druckkopf (111) zu verändern, um schichtweise Druckmasse auf die räumliche Anordnung von Druckmasse aufzutragen.

13. System (100) gemäß einem der vorhergehenden Ansprüche, wobei die Mittel (121, 122) zum Garen ein oder mehrere Heizelemente (122) umfassen, die eingerichtet sind, durch Konvektion und/oder durch Strahlung die Garkammer (120) und/oder Druckmasse zu erhitzen.

14. System (100) gemäß einem der vorhergehenden Ansprüche, wobei der Druckkopf (111) ein oder mehrere Druckmasse-Behälter mit jeweils zumindest einer Düse (112) umfasst, durch die Druckmasse auf die Ablagefläche (101) extrudiert werden kann.

15. System (100) gemäß einem der vorhergehenden Ansprüche, wobei das System (100) als ein Hausgerät ausgebildet ist, das auf eine Arbeitsplatte einer Küche gestellt und/oder in einen Einbauschrank einer Küche eingebaut werden kann.

## Claims

1. System (100) for producing a cooked foodstuff (102), wherein the system (100) comprises:
- a printing chamber (110) having a moving printhead (111) for the extrusion of printing mass;
- a cooking chamber (120) arranged above the printing chamber (110) with means (121, 122) for cooking printing mass;
- a moving tray (101) for printing mass, which can be moved by a movement mechanism (115) between the printing chamber (110) and the cooking chamber (120); and
- a storage chamber (130) arranged laterally next to the printing chamber (110) for receiving the printhead (111).

2. System (100) according to claim 1, wherein the system (100) comprises a control unit (140) which is designed to:
- enable the moving tray (101) for creating a spatial arrangement of printing mass in the printing chamber (110) to be arranged underneath the printhead (111);
- actuate the printhead (111) to create a spatial arrangement of printing mass on the tray (101), and following this to move into the storage chamber (130);
- actuate the movement mechanism (115) to transfer the moving tray (101) containing the spatial arrangement of printing mass into the cooking chamber (120); and
- actuate the means (121, 122) for cooking, in order by cooking the spatial arrangement of printing mass to produce a cooked foodstuff (102).

3. System (100) according to one of the preceding claims, wherein the system (100) comprises a thermally insulating wall which is designed to insulate the storage chamber (130) thermally from the cooking chamber (120), in particular if the tray (101) is located in the cooking chamber (120).

4. System (100) according to claim 3, wherein
- the thermally insulating wall is formed at least partially by the tray (101);
- the tray (101) is designed such that the tray (101) closes off the cooking chamber (120) from the printing chamber (110); and
- the tray (101) comprises an insulating layer (105).

5. System (100) according to one of claims 3 to 4, wherein
- the storage chamber (130) comprises a moving gate (303), with which the storage chamber (130) can be closed off from the printing chamber (110); and
- the thermally insulating wall comprises the moving gate (303).

6. System (100) according to one of the preceding claims, wherein the storage chamber (130) comprises temperature adjustment means (301, 302) in order to adjust the temperature of an interior of the storage chamber (130).

7. System (100) according to claim 6, wherein the temperature adjustment means (301, 302)
- comprise a blower in order to bring about a circulation of air in the interior of the storage chamber (130); and/or
- comprise a heat exchanger in order to transfer thermal energy from the interior to an area surrounding the storage chamber (130).

8. System (100) according to one of claims 6 to 7, wherein the temperature adjustment means (301) comprise a ventilation channel, via which air can be removed from the interior of the storage chamber (130) and via which air can be guided into the interior of the storage chamber (130).

9. System (100) according to one of the preceding claims, wherein the system (100) comprises one or more vertical guide rails (114) running between the printing chamber (110) and the cooking chamber (120), and along which the moving tray (101) can be moved between the printing chamber (110) and the cooking chamber (120) by means of the movement mechanism (115).

10. System (100) according to one of the preceding claims, wherein
- the system (100) comprises one or more lateral guide rails (113), which extend from the printing chamber (110) into the storage chamber (130); and
- the printhead (111) is designed to move along the one or more lateral guide rails (113) between the printing chamber (110) and the storage chamber (130).

11. System (100) according to claim 10 referring back to claim 2, wherein the control unit (140) is designed to enable the printhead (111) to
- move along the one or more lateral guide rails (113) to create the spatial arrangement of printing mass; and
- following this, to move along the one or more lateral guide rails (113) into the storage chamber (130).

12. System (100) according to claim 11, wherein the control unit (140) is designed to actuate the movement mechanism (115) of the tray (101), to change a distance between the tray (101) and the printhead (111), in order to apply layers of printing mass to the spatial arrangement of printing mass.

13. System (100) according to one of the preceding claims, wherein the means (121, 122) for cooking comprise one or more heating elements (122), which are designed to heat the cooking chamber (120) and/or printing mass by convection and/or by radiation.

14. System (100) according to one of the preceding claims, wherein the printhead (111) comprises one or more printing mass containers, each having at least one nozzle (112), through which printing mass can be extruded onto the tray (101).

15. System (100) according to one of the preceding claims, wherein the system (100) is designed as a household appliance which can be placed on a work surface in a kitchen and/or integrated into a built-in unit of a kitchen.

## Revendications

1. Système (100) destiné à la préparation d'un aliment (102) cuisiné, le système (100) comprenant ;
- une chambre de pression (110) dotée d'une tête de pression (111) mobile pour l'extrusion d'une masse à presser ;
- une chambre de cuisson (120) disposée au-dessus de la chambre de pression (110), dotée de moyens (121, 122) pour la cuisson de la masse à presser ;
- une surface de pose (101) déplaçable pour la masse à presser, laquelle peut être déplacée entre la chambre de pression (110) et la chambre de cuisson (120) au moyen d'un mécanisme de déplacement (115) ; et
- une chambre de stockage (130) disposée latéralement à côté de la chambre de pression (110), destinée à loger la tête de pression (111).

2. Système (100) selon la revendication 1, le système (100) comprenant une unité de commande (140) qui est configurée
- pour inciter à ce que la surface de pose (101) déplaçable soit disposée en dessous de la tête de pression (111) afin de générer une disposition spatiale de la masse à presser dans la chambre de pression (110) ;
- pour commander la tête de pression (111) afin de générer une disposition spatiale de la masse à presser sur la surface de pose (101), et afin qu'elle se déplace ensuite dans la chambre de stockage (130) ;
- pour commander le mécanisme de déplacement (115) pour transférer la surface de pose (101) déplaçable dans la chambre de cuisson (120) avec la disposition spatiale de la masse à presser ; et
- pour commander les moyens (121, 122) de cuisson afin de préparer un aliment (102) cuisiné par cuisson de la disposition spatiale de la masse à presser.

3. Système (100) selon l'une quelconque des revendications précédentes, le système (100) comprenant une paroi isolant thermiquement qui est conçue pour isoler la chambre de stockage (130) thermiquement de la chambre de cuisson (120), notamment lorsque la surface de pose (101) se trouve dans la chambre de cuisson (120).

4. Système (100) selon la revendication 3,
- la paroi isolant thermiquement étant formée au moins en partie par la surface de pose (101) ;
- la surface de pose (101) étant réalisée de manière à ce que la surface de pose (101) ferme la chambre de cuisson (120) en direction de la chambre de pression (110) ; et
- la surface de pose (101) comprenant une couche isolante (105).

5. Système (100) selon l'une quelconque des revendications 3 à 4,
- la chambre de stockage (130) comprenant une porte mobile (303) à l'aide de laquelle la chambre de stockage (130) peut être fermée en direction de la chambre de pression (110) ; et
- la paroi isolant thermiquement comprenant la porte mobile (303).

6. Système (100) selon l'une quelconque des revendications précédentes, la chambre de stockage (130) comprenant des moyens de régulation de température (301, 302) afin de tempérer un espace intérieur de la chambre de stockage (130).

7. Système (100) selon la revendication 6, les moyens de régulation de température (301,302)
- comprenant un ventilateur afin de provoquer une circulation d'air dans l'espace intérieur de la chambre de stockage (130) ; et/ou
- comprenant un échangeur de chaleur afin de transférer l'énergie thermique à des environs de la chambre de stockage (130) à partir de l'espace intérieur.

8. Système (100) selon l'une quelconque des revendications 6 à 7, les moyens de régulation de température (301) comprenant un canal d'aération par l'intermédiaire duquel de l'air peut être prélevé de l'espace intérieur de la chambre de stockage (130) et par l'intermédiaire duquel de l'air peut être amené dans l'espace intérieur de la chambre de stockage (130).

9. Système (100) selon l'une quelconque des revendications précédentes, le système (100) comprenant un ou plusieurs rails de guidage (114) s'étendant verticalement entre la chambre de pression (110) et la chambre de cuisson (120), le long desquels la surface de pose (101) déplaçable peut être déplacée entre la chambre de pression (110) et la chambre de cuisson (120) au moyen du mécanisme de déplacement (115).

10. Système (100) selon l'une quelconque des revendications précédentes,
- le système (100) comprenant un ou plusieurs rails de guidage (113) latéraux qui s'étendent dans la chambre de stockage (130) depuis la chambre de pression (110) ; et
- la tête de pression (111) étant conçue pour se déplacer entre la chambre de pression (110) et la chambre de stockage (130) le long de l'un ou des plusieurs rails de guidage (113) latéraux.

11. Système (100) selon la revendication 10 avec renvoi à la revendication 2, l'unité de commande (140) étant configurée pour inciter la tête de pression (111)
- à se déplacer le long de l'un ou des plusieurs rails de guidage (113) latéraux afin de générer la disposition spatiale de la masse à presser ; et,
- suite à cela, à se déplacer dans la chambre de stockage (130) le long de l'un ou des plusieurs rails de guidage (113) latéraux.

12. Système (100) selon la revendication 11, l'unité de commande (140) étant configurée pour commander le mécanisme de déplacement (115) de la surface de pose (101), pour modifier un écart entre la surface de pose (101) et la tête de pression (111) afin d'appliquer la masse à presser couche par couche sur la disposition spatiale de la masse à presser.

13. Système (100) selon l'une quelconque des revendications précédentes, les moyens (121, 122) de cuisson comprenant un ou plusieurs éléments chauffants (122) qui sont conçus pour échauffer la chambre de cuisson (120) et/ou la masse à presser par convection et/ou par rayonnement.

14. Système (100) selon l'une quelconque des revendications précédentes, la tête de pression (111) comprenant un ou plusieurs récipients de masse à presser dotés respectivement d'au moins une buse (112), au moyen de laquelle la masse à presser peut être extrudée sur la surface de pose (101).

15. Système (100) selon l'une quelconque des revendications précédentes, le système (100) étant réalisé en tant qu'un appareil ménager qui peut être posé sur un plan de travail d'une cuisine et/ou dans une armoire encastrée d'une cuisine.
